(19) **Europäisches Patentamt European Patent Office Office européen des brevets**

(11) **EP 3 678 905 B1**

(12) **FASCICULE DE BREVET EUROPEEN**

(45) Date de publication et mention de la délivrance du brevet:
**01.09.2021 Bulletin 2021/35**

(21) Numéro de dépôt: **18752569.6**

(22) Date de dépôt: **09.07.2018**

(51) Int Cl.:
*B60T 7/22* *(2006.01)*     *B60T 8/1755* *(2006.01)*

(86) Numéro de dépôt international:
**PCT/FR2018/051716**

(87) Numéro de publication internationale:
**WO 2019/048746 (14.03.2019 Gazette 2019/11)**

(54) **PROCÉDÉ ET DISPOSITIF DE CONTRÔLE DE DISTANCE DE FREINAGE D'URGENCE**

VERFAHREN UND VORRICHTUNG ZUR STEUERUNG DER NOTBREMSENTFERNUNG

METHOD AND DEVICE FOR CONTROLLING EMERGENCY BRAKING DISTANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2017 FR 1758199**

(43) Date de publication de la demande:
**15.07.2020 Bulletin 2020/29**

(73) Titulaire: **Renault S.A.S.**
**92100 Boulogne-Billancourt (FR)**

(72) Inventeur: **BLANCO, Yann**
**75017 Paris (FR)**

(56) Documents cités:
**WO-A1-2015/113679     CA-A1- 2 860 892**
**US-A1- 2016 221 549**

**Description**

La présente invention concerne un procédé et un système d'aide à la conduite connu par l'homme du métier sous l'acronyme anglo-saxon ADAS (« Advanced Driver Assistance System »). Elle concerne plus particulièrement un procédé et un module de freinage d'urgence pour automobile connu par l'homme du métier sous l'acronyme anglo-saxon AEBS (« Autonomous Emergency Braking System »).

Un module de freinage d'urgence AEB permet de déclencher un freinage automatiquement d'une automobile équipée d'un tel système.

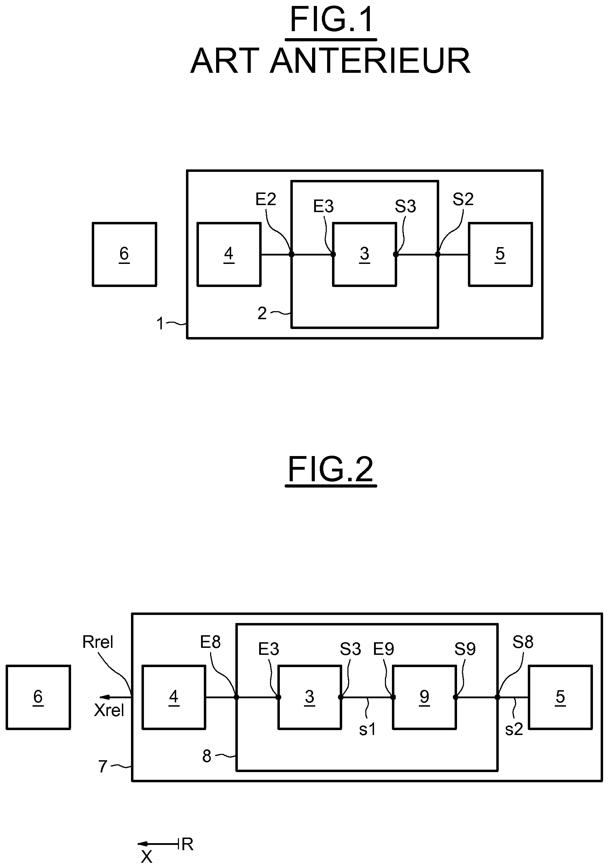

La figure 1 illustre l'architecture d'un module de freinage d'urgence 3 incorporé dans un système d'aide à la conduite 2 d'un véhicule 1 selon l'état de la technique qui interagit avec une cible 6.

Le véhicule 1 comprend des moyens de perception 4, notamment des capteurs de distance, reliés à une entrée E2 du système d'aide à la conduite 2. Une sortie S2 du système d'aide à la conduite 2 est reliée à des moyens de freinage 5 du véhicule 1, par exemple des freins à disque.

Le système d'aide à la conduite 2 comprend le module de freinage 3 dont une entrée E3 est reliée à l'entrée E2 du système 2 et une sortie S3 est raccordée à la sortie S2 du système 2.

Les moyens de perception 4 transmettent au module 3 des informations de distance et de vitesse relative entre le véhicule 1 et la cible 6 par exemple une voiture, un piéton ou un cycliste.

Lorsque le module de freinage 3 perçoit un risque avéré de collision entre la cible 6 et le véhicule 1, le module 3 actionne les moyens de freinage 5 entraînant un freinage automatique du véhicule 1 de sorte à empêcher la collision entre la cible 6 et le véhicule 1.

Le freinage automatique est piloté par le module 3 au maximum des possibilités des moyens de freinage 5. En d'autres termes, le freinage est piloté de sorte que la distance d'arrêt du véhicule 1 soit la plus courte possible. Le freinage ainsi piloté est un freinage d'urgence.

Dans certaines situations, le freinage ainsi piloté est surperformant, c'est-à-dire que le freinage maximal entraîne un arrêt du véhicule 1 à une distance de plusieurs mètres de la cible 6.

Le freinage surperformant résulte de la non prise en compte par le système 2 des caractéristiques du véhicules, notamment du frein moteur et de la masse du véhicule, et des conditions environnementales dans lesquelles évolue le véhicule 1, notamment des caractéristiques de la chaussée sur laquelle évolue le véhicule 1, par exemple la pente de la chaussée, et le comportement de la cible 6, par exemple une légère accélération de la cible 6. Cet effet peut être ressenti par l'utilisateur du véhicule comme un défaut du système d'aide à la conduite 2, et lorsque le véhicule 1 précède un autre véhicule, un freinage d'urgence génère un risque de collision des deux véhicules se suivant.

Dans le but d'améliorer le ressenti du conducteur du véhicule et de minimiser les risque de collision lors des phases de freinage d'urgence, on cherche à piloter la puissance de freinage des moyens de freinage 5 selon l'imminence du risque de collision et en prenant en compte les conditions environnementales dans lesquelles évoluent le véhicule, c'est-à-dire que l'on cherche à gérer les conditions d'arrêt du véhicule lorsque le freinage est suffisamment précoce et/ou efficace pour éviter la collision entre le véhicule et la cible selon les caractéristiques de la chaussée sur laquelle évolue le véhicule.

On pourra à cet égard se référer au document US2016221549 proposant une unité de contrôle électronique qui va moduler la force de freinage du véhicule en fonction de la distance et de la vitesse relative entre le véhicule et une cible.

On pourra également se référer au document CN104139781 qui présente une méthode basée sur la communication de données entre deux véhicules pour réguler la décélération du véhicule lors d'un freinage d'urgence.

Le document US2014156157 décrit un système AEBS permettant au conducteur de passer outre le système AEBS dans des conditions spécifiques.

Le document CA2860892 cherche à améliorer la prise de décision quant à l'enclenchement du freinage d'urgence par mise en œuvre entre autres des équations de mouvement.

Dans le document DE102011085585, le système de régulation de vitesse du véhicule est directement relié à la pédale de frein afin de tenir compte de toutes les situations engendrées par la manipulation de la pédale de frein.

On pourra également se référer au document DE102010029223 qui illustre un procédé dans lequel la vitesse relative entre un véhicule suivi et un véhicule suiveur est calculée. Le freinage est piloté par la vitesse relative.

Les procèdes et dispositifs selon l'état de la technique exposés ci-dessus sont des procédés et dispositifs alternatifs de freinage d'urgence mais ne prennent pas en compte les caractéristiques du véhicules et les conditions environnementales dans lesquelles évoluent le véhicule.

Le but de l'invention est de pallier ces inconvénients.

Au vu de ce qui précède, l'invention propose un procédé de contrôle d'une distance de freinage d'urgence pour un véhicule automobile comprenant un système d'aide à la conduite comprenant un module de freinage et un module de contrôle de distance de freinage d'urgence.

Selon une caractéristique du procédé selon l'invention, lorsque le module de freinage délivre une consigne de freinage d'urgence en entrée dudit module de contrôle de distance, ledit module de contrôle de distance élabore une consigne de freinage variable selon le temps et destinée à des moyens de freinage dudit véhicule.

Selon une autre caractéristique, l'élaboration de ladite consigne de freinage utilise un modèle dynamique unidimensionnel dudit véhicule.

Avantageusement, on estime la distance d'arrêt du véhicule pour une consigne de freinage maximale des moyens de freinage et on détermine ladite consigne.

De préférence, ladite consigne est élaborée en boucle ouverte.

Selon une autre caractéristique, lequel on corrige ladite consigne élaborée en boucle ouverte en intégrant des moyens de correction formant une boucle fermée.

Avantageusement, on détermine une estimation de l'accélération d'une cible identifiée par des moyens de détection reliés audit système d'aide à la conduite.

L'invention a aussi pour objet un système d'aide à la conduite comprenant un module de freinage et un module de contrôle de distance de freinage d'urgence, le module de freinage étant destiné à être relié à des moyens de freinage.

Selon une caractéristique du système selon l'invention, le module de contrôle de distance de freinage est relié à une sortie du module de freinage.

De préférence le système comprend en outre une unité de traitement embarquée.

L'invention a également pour objet un véhicule automobile comportant un système d'aide à la conduite tel que défini ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1, dont il a déjà été fait mention, montre l'architecture générale d'un dispositif de freinage d'urgence incorporé dans un véhicule selon l'état de la technique;
- la figure 2 montre l'architecture générale d'un dispositif de freinage d'urgence incorporé dans un véhicule conforme à l'invention;
- la figure 3 montre un exemple de consigne de freinage élaborée par le dispositif d'aide à la conduite conforme à l'invention ; et
- les figures 4 et 5 montrent des exemples de consigne de freinage à l'approche d'une cible élaborée par le dispositif d'aide à la conduite conforme à l'invention.

On se réfère à la figure 2 qui illustre l'architecture d'un système d'aide à la conduite 8 mettant en œuvre un procédé de gestion de freinage d'urgence incorporé dans un véhicule 7 selon un mode de réalisation de l'invention et qui interagit avec la cible 6.

Les éléments identiques à ceux de la figure 1 sont désignés par les mêmes références numériques.

Le véhicule 7 comprend les moyens de perception 4 et les moyens de freinage 5.

Les moyens de perception 4 transmettent des informations de distance et de vitesse relative entre le véhicule 1 et la cible 6 au système 8, et lorsqu'ils sont actionnés, les moyens de freinage 5 freinent le véhicule 7.

Une entrée E8 du système d'aide à la conduite 8 est reliée à une sortie des moyens de perception, et une sortie S8 du système 8 est reliée aux moyens de freinage 5.

Le système d'aide à la conduite 8 comprend le module de freinage 3 et un module de contrôle de distance de freinage d'urgence 9.

L'entrée E3 du module de freinage 3 est reliée à l'entrée E8 et la sortie S3 du dispositif 3 est reliée à une entrée E9 du module de contrôle de distance de freinage d'urgence 9. Une sortie S9 du module 9 est reliée à la sortie S8.

Un signal s1 circule entre la sortie S3 et l'entrée E9, et un signal s2 circule entre la sortie S8 et les moyens de freinage 5.

Le signal s1 comprend la consigne de freinage émise par le module 3 et le signal s2 comprend la consigne de freinage $T_{Brk}$ émise par le module 9.

La détermination de la consigne $T_{Brk}$ sera expliquée par la suite.

Le module 9 est situé en aval du module de freinage 3 et peut être désactivé à tout instant. Avantageusement, le module 9 n'a pas d'impact sur la mise au point du module 3.

Lorsque le module 8 ne permet que la réduction de vitesse du véhicule 7 et non l'évitement de la cible 6, le module 9 se comporte comme « un fil », c'est-à-dire qu'il transmet le signal reçu à son entrée E9 à sa sortie S9 sans modification, en d'autres termes les signaux s1 et s2 sont identiques.

Le système d'aide à la conduite 8 comprend une unité de traitement embarquée mettant en œuvre les modules de freinage 3 et de contrôle de distance de freinage d'urgence 9.

Par exemple l'unité de traitement est réalisée à partir d'un calculateur, mais il peut s'agir de tout dispositif embarqué permettant de mettre en œuvre les modules 3 et 9.

Comme cela sera décrit en détail par la suite, de tels moyens de calcul sont par exemple destinés à mettre en œuvre des lois de commande en mettant en œuvre un modèle dynamique du véhicule 7 et de la cible 6 incorporé dans le module 9 pour déterminer la consigne de freinage $T_{Brk}$.

Les moyens de calcul mettent en œuvre un exemple de procédé de contrôle d'une distance de freinage à présent décrit.

Le procédé de contrôle de distance de freinage comprend un modèle dynamique permettant de calculer les grandeurs physiques nécessaires à l'exécution du procédé.

Le modèle dynamique est unidimensionnel selon l'axe X d'un repère absolu R lié à la route. Le véhicule 7 et la cible 6 sont supposés rigides sans mouvement de caisse. Les différents calculs sont projetés dans un repère relatif lié à l'avant du véhicule Rrel.

Dans le repère absolu R, on note :

- $a_{ego}(t)$ : l'accélération du véhicule 7 en fonction du temps t ;
- $V_{ego}(t)$ : la vitesse du véhicule 7 en fonction du temps t ;
- $X_{ego}(t)$ : la position du véhicule 7 en fonction du temps t ;
- $a_{tgt}(t)$ : l'accélération de la cible 6 en fonction du temps t;
- $V_{tgt}(t)$ : la vitesse de la cible 6 en fonction du temps t; et
- $X\_tgt(t)$ : la position de la cible 6 en fonction du temps t.

L'accélération relative $a_{rel}(t)$, la vitesse relative $V_{rel}(t)$ et la position relative $X_{rel}(t)$ entre la cible 6 et le véhicule 7 sont données par les équations suivantes :

$$a_{rel}(t) = a_{tgt}(t)\text{-}a_{ego}(t) \quad (\text{équation } 1)$$

$$V_{rel}(t) = V_{tgt}(t)\text{-}V_{ego}(t) \quad (\text{équation } 2)$$

$$X_{rel}(t) = X_{tgt}(t)\text{-}X_{ego}(t) \quad (\text{équation } 3)$$

En considérant les équations de la dynamique, l'accélération $a_{ego}(t)$ du véhicule 7 est décrite par l'équation suivante :

$$a_{ego}(t) = -g \cdot \sin\alpha - F_{Pert} - g \cdot \frac{m_0}{m} \cdot [1-\varepsilon] \cdot \frac{T_{Brk}(t)}{T_{MAX}} \quad (\text{équation } 3)$$

où :

- g est l'accélération gravitationnelle ;
- $\alpha$ est la pente de la chaussée comptée positivement en montée sur laquelle évolue le véhicule 7 ;
- $F_{Pert}$ est un freinage perturbateur, par exemple le frein moteur du véhicule 7 ;
- m est la masse actuelle du véhicule 7 ;
- $m_0$ est la masse nominale du véhicule 7 lors de la mise au point du module 8 ;
- $\varepsilon$ est le facteur de perte de freinage lié à adhérence du véhicule 7 sur la chaussée, par exemple $\varepsilon$ est égal à 0.2 sur une chaussée humide ;
- $T_{Brk}(t)$ est la consigne de freinage variable selon le temps t délivré par le module 9; et
- $T_{MAX}$ est la consigne de freinage maximal.

Par conséquent le signal s2 est égal à $T_{Brk}(t)$.

L'accélération de la cible selon dans le repère absolu R est donnée par l'équation suivante :

$$a_{tgt}(t) = A_{tgt} + \Delta a_{tgt}(t) \quad (\text{équation } 4)$$

où :

- $A_{tgt}$ est l'accélération constante de la cible 6 durant le freinage d'urgence ; et
- $\Delta a_{tgt}(t)$ est l'accélération variable de la cible 6 pendant le freinage d'urgence en fonction du temps t.

L'accélération relative $a_{rel}$ dans le repère absolu R est décrite par l'équation suivante :

$$a_{rel}(t) = A_{Pert}(t) - K(t) \quad (\text{équation } 5)$$

où :

- 

$$K(t) = -g \cdot \frac{m_0}{m} \cdot [1 - \varepsilon] \cdot \frac{T_{Brk}(t)}{T_{MAX}} \; ; \text{ et } (\text{équation } 6)$$

- 

$$A_{Pert}(t) = A_{tgt} + \Delta a_{tgt}(t) + g \cdot \sin\alpha + F_{Pert} \quad (\text{équation } 7)$$

On note les grandeurs mesurées par les moyens de perception 4 comme suit :

- $V_{rel}^{mes}(t)$ est la vitesse relative mesurée à l'instant t ; et
- $X_{rel}^{mes}(t)$, position relative mesurée à l'instant t.

On note $V_{ego}^{mes}(t)$ la vitesse absolue du véhicule 7 mesurée à l'instant t par des moyens de mesure intégrés dans le véhicule, notamment dans le CAN du véhicule.
On note par ailleurs :

- $D_{Stop}$ la distance relative entre la cible 6 et le véhicule 7 pour laquelle la vitesse relative est nulle ;
- $t_{Stop}$ le temps au bout duquel la vitesse relative $D_{Stop}$ s'annule ;
- $\hat{D}_{Tmax,Vrel}=0$ est une estimation de la distance d'arrêt du véhicule 7 pour la consigne de freinage $T_{MAX}$ appliquée sur les moyens de freinage 5; et
- $\hat{A}_{relMAX}$ est une estimation de l'accélération relative $a_{rel}(t)$ pour la consigne de freinage $T_{MAX}$ appliquée sur les moyens de freinage 5.

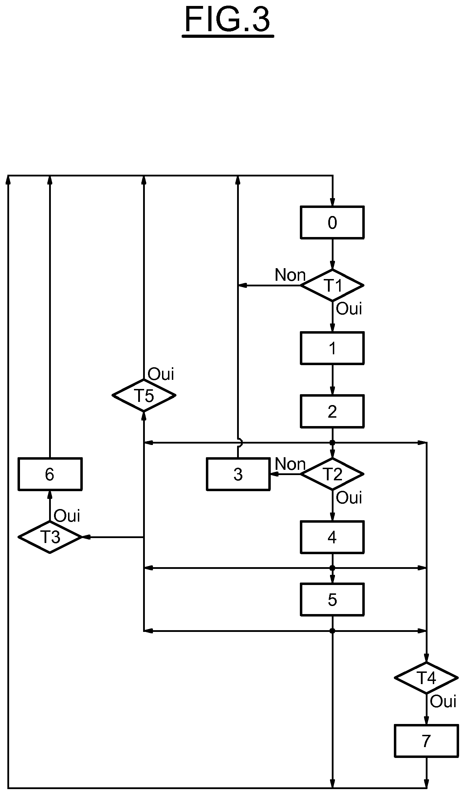

La figure 3 montre le déroulement d'un exemple de procédé de contrôle d'une distance de freinage d'urgence implémenté dans le module 9. Le procédé comprend cinq tests logiques T1, T2, T3, T4 et T5, et huit étapes 0, 1, 2, 3, 4, 5, 6 et 7.
Une première étape 0 est l'étape initiale du procédé. A cette étape, le module 9 se comporte comme un fil. Les signaux s1 et s2 sont identiques. Le système 8 se comporte comme le système 2, connu de l'état de la technique.
L'étape 1 suivante est activée si le jeu de deux conditions est rempli, c'est-à-dire si le test T1 est validé.
Si le test T1 n'est pas validé, la procédure reste à l'étape 0.
Une première condition du test logique T1 impose que le module 3 génère un signal s1 correspondant à la consigne de freinage maximal $T_{MAX}$ ayant pour objectif un arrêt du véhicule 7.
Une seconde condition requiert que le procédé de contrôle d'une distance de freinage d'urgence soit autorisé pour la cible 6 détectée par les moyens de détection 4. Le système de contrôle en distance ne se déclenche que pour des cibles de type choisi (Ex : système actif pour les véhicules cibles, inactif pour des piétons ou cyclistes).
A l'étape 1, le module 9 se comporte encore comme un fil et délivre un signal s2 égal au signal s1, en d'autres termes la consigne de freinage s2 est égale à $T_{MAX}$.
Il s'agit d'une étape d'attente dont la durée est variable et dépend de l'état des moyens de freinage 5.
Pour une consigne de freinage maximale $T_{MAX}$, les moyens de freinage 5 ont une dynamique de réponse variable selon leur état précédent. Par exemple si un freinage modéré a été commandé précédemment, la durée pour atteindre la puissance de freinage maximale correspondant à la consigne $T_{MAX}$ est réduite de l'ordre de 150ms.
A l'étape 2, on calcule la distance $\hat{D}_{Tmax,Vrel=0}$ d'arrêt du véhicule 7 pour la consigne de freinage $T_{MAX}$. A cette étape, la consigne $T_{Brk}(t)$ délivrée aux moyens de freinage est égale à $T_{MAX}$.
On suppose :

- que l'accélération de la cible 6 est constante :

$$\Delta a_{tgt}(t) = 0 \quad (\text{équation } 8)$$

- que la consigne de freinage est constante :

$$T_{Brk}(t) = T_{MAX} \quad (\text{équation } 9) ;$$

- et que la vitesse relative entre la cible 6 et le véhicule 7 est nulle :

$$V_{rel}(t) = 0 \quad (\text{équation } 10)$$

En utilisant les valeurs mesurées définies précédemment, on obtient les équations suivantes :

$$\hat{D}_{T\max,Vrel=0} = -\frac{V_{rel}^{mes}(t)^2}{2\,\hat{A}_{relMAX}} + X_{rel}^{mes}(t) \qquad (\text{équation } 11)$$

$$\hat{A}_{relMAX} = \left[ \frac{V_{rel}^{mes}(t) - V_{rel}^{mes}(t - \Delta t)}{\Delta t} \right] \qquad (\text{équation } 12)$$

L'estimation $\hat{D}_{Tmax,Vrel=0}$ de la distance d'arrêt du véhicule 7 est dépendante de l'estimation $\hat{A}_{relMAX}$ de l'accélération relative arei(t) pour la consigne $T_{MAX}$ fournie par la mesure de vitesse sur un intervalle de temps $\Delta t$. L'intervalle $\Delta t$ dépend de la qualité des moyens de perception 4, l'intervalle est de l'ordre de 100ms.

L'estimation $\hat{D}_{Tmax,Vrel}=0$ est comparée à un seuil P lors du test T2, P est par exemple égal à 1 m. Le seuil P est la distance minimale d'arrêt du véhicule 7 avant de percuter la cible 6.

Si l'estimation $\hat{D}_{Tmax,Vrel=0}$ est supérieure au seuil P, on considère que les conditions de sécurité sont suffisantes pour une régulation de la consigne de freinage. Le test T2 est validé et on autorise la consigne de freinage variable $T_{Brk}(t)$ qui sera déterminée à l'étape 4.

Si l'estimation $\hat{D}_{Tmax,Vrel=0}$ est inférieure au seuil P, le test T2 n'est pas validé et on passe à l'étape 3.

A l'étape 3, la consigne de freinage s2 égale à la consigne de freinage maximale $T_{MAX}$ est maintenue. La consigne $T_{Brk}(t)$ est égale à $T_{MAX}$ pendant une durée prédéterminée $T_{out}$ puis à l'issu de cette durée on revient à l'étape initiale 0.

A l'étape 4, on recalcule l'estimation $\hat{D}_{Tmax,Vrel}=0$ en fonction des positions et vitesses relative $X_{rel}^{mes}(t)$ et $V_{rel}^{mes}(t)$.

On calcule la consigne $T_{Brk}(t)$ de freinage permettant d'annuler la vitesse relative $V_{rel}$ à une distance $D_{Stop}$ de la cible 6, par exemple $D_{Stop}$ est égale à 0.5 m, en boucle ouverte à chaque pas de calcul.

On suppose que le frein moteur, la pente et le comportement de la cible 6 restent semblables à ceux des états précédents.

Les données précises de masse m et d'état de la route ε n'étant pas disponibles, on considère les conditions donnant la consigne $T_{Brk}(t)$ de freinage maximale soit :

$$m = m_0 ; \text{ et } \quad (\text{équation } 13)$$

$$\varepsilon = 0 \quad (\text{équation } 14)$$

Sous ces hypothèses, l'expression de la consigne $T_{Brk}(t)$ de freinage en boucle ouverte est décrite par les équations suivantes :

$$T_{Brk}(t) = T_{MAX} - \frac{T_{MAX}}{g} \cdot (\hat{A}_{relMAX} - \hat{A}_{rel}^{\ cmd}(t))$$

(équation 15)

où

$$\hat{A}_{rel}^{\ cmd}(t) = \frac{V_{rel}^{\ mes}(t)^2}{2 \cdot \left(X_{rel}^{\ mes}(t)\right) - D_{Stop})}$$

(équation 16)

et

$\hat{A}_{relMAX}$ est calculé comme décrit précédemment à l'étape 2. L'utilisation de la consigne $T_{Brk}(t)$ en boucle ouverte comprenant l'estimation $\hat{A}_{relMAX}$ de l'accélération relative arei(t) pour la consigne de freinage $T_{MAX}$ permet de prendre en compte les conditions environnementales. En effet, l'estimation $\hat{A}_{relMAX}$ est déterminée selon la vitesse relative mesurée $V_{rel}^{\ mes}(t)$.

Puis à l'étape 5, la consigne $T_{Brk}(t)$ est corrigée de sorte à prendre en compte des perturbations causées notamment par le frein moteur du véhicule 7.

Après une durée prédéfinie, par exemple 100ms, la consigne $T_{Brk}(t)$ calculée à l'étape précédente en utilisant une estimation de l'accélération $\hat{A}_{rel}^{\ cmd}(t)$ est recalculée en utilisant une régulation en boucle fermée basée sur l'erreur de l'accélération relative $E_{Acmd}(t)$ en intégrant des moyens de correction. Les moyens de correction comprennent un régulateur de type PI (Proportionnel Intégral) de coefficients de gain proportionnel $k_p$ et de gain intégral $k_i$ dans la boucle de régulation. Les coefficients de gain $k_p$ et $k_i$ sont déterminés par les méthodes usuelles connues de l'homme du métier.

En effet, la consigne $T_{Brk}(t)$ de freinage souhaitée est différente de la puissance de freinage correspondante développée par les moyens de freinage 5 en raison de perturbations, notamment causées par le frein moteur du véhicule 7, la dynamique des moyens de freinage 5. Il est nécessaire de tenir compte de cet écart pour corriger la valeur de consigne $T_{Brk}(t)$.

L'équation suivante donne l'erreur $E_{Acmd}(t)$ d'accélération relative :

$$E_{Acmd}(t) = \frac{V_{rel}^{\ mes}(t)^2}{2 \cdot (X_{rel}^{\ mes}(t) - D_{Stop})} - \left\lfloor \frac{V_{rel}^{\ mes}(t - \Delta t) - V_{rel}^{\ mes}(t)}{\Delta t} \right\rfloor$$

(équation 17)

où $\Delta t$ est un intervalle de temps nécessaire pour réaliser une estimation de l'accélération réelle, par exemple $\Delta t$ est égal à 100 ms.

En utilisant la formule d'erreur $E_{Acmd}(t)$ d'accélération relative définie à l'équation 17, la commande en boucle fermée devient :

$$T_{Brk}(t) = T_{MAX} - \frac{T_{MAX}}{g} \cdot (\hat{A}_{relMAX} - \left[ \hat{A}_{rel}^{\ cmd}(t) + k_p \cdot E_{Acmd}(t) + k_i \cdot \sum E_{Acmd}(t) \right])$$

(équation 18)

Le sommateur $\sum E_{Acmd}(t)$ est remis à zéro dès que l'on se trouve plus à l'étape 5. Par ailleurs, l'état du sommateur $\sum E_{Acmd}(t)$ est maintenu si la consigne $T_{Brk}(t)$ est saturée, c'est-à-dire si $T_{Brk}(t)$ est égale à $T_{MAX}$ ou si $T_{Brk}(t)$ est égale à la valeur de freinage minimale $T_{MIN}$ déterminée selon les caractéristiques des moyens de freinage 5.

Selon l'équation 16, l'accélération relative $\hat{A}_{rel}^{\ cmd}(t)$ permettant l'arrêt à la distance voulue du véhicule 7 dépend de la mesure de position $X_{rel}^{\ mes}(t)$.

A l'approche de la cible 6, les erreurs de mesure en position des moyens de détection 4 sont importantes et l'estimation de la vitesse relative $V_{rel}^{\ mes}(t)$ est délicate.

Lorsque le procédé se trouve à l'étape 4 ou 5 et la cible 6 est à une distance inférieure à un seuil H, par exemple 0.4 m, le test T3 est validé et on passe à l'étape 6.

Dans cette étape, la consigne $T_{Brk}(t)$ de freinage à l'étape précédente, c'est-à-dire à l'étape 4 ou 5, est maintenue jusqu'à la fin du freinage. La consigne de freinage est constante et non régulée. A la fin du freinage, on revient à l'étape 0.

Dans toutes les étapes précédentes la consigne de freinage $T_{Brk}(t)$ a été déterminée en supposant que l'accélération $a_{tgt}(t)$ de la cible 6 est constante, c'est-à-dire que $\Delta a_{tgt}(t)$ est nulle.

Dans une certaine mesure, le module 9 est capable d'absorber des variations d'accélération $\Delta a_{tgt}(t)$ absolue de la cible 6. Néanmoins, si la cible 6 freine brusquement alors que le module 9 est dans une étape différente des étapes 0 et 1, la durée nécessaire pour que la consigne $T_{Brk}(t)$ de freinage soit saturée, c'est-à-dire dans ce cas égale à $T_{MAX}$ est trop longue.

L'estimation $\hat{D}_{Tmax,Vrel}=0$ comprenant le calcul de l'estimation $\hat{A}_{relMAX}$ de l'accélération relative arei(t) pour la consigne de freinage $T_{MAX}$ n'est plus valable. En effet, le calcul de l'estimation $\hat{A}_{relMAX}$ prend comme hypothèse une évolution de la cible 6 selon une accélération constante, c'est-à-dire que $\Delta a_{tgt}(t)$ est nulle. Cette hypothèse n'est plus vérifiée lors d'un freinage brusque.

Lorsqu'un freinage brusque de la cible 6 est détecté dans l'une des étapes 2, 4 ou 5, c'est-à-dire lorsque le test T4 est validé, on passe à l'étape 7. La détermination d'un freinage brusque de la cible 6 sera expliquée par la suite.

A l'étape 7, la consigne $T_{Brk}(t)$ de freinage est égale à $T_{MAX}$ pendant la durée du freinage puis on passe à l'étape 0. Le module 9 se comporte comme un fil.

Pour détecter un freinage brusque de la cible 6, on détermine un estimateur $\hat{A}_{tgt}(t)$ de l'accélération $a_{tgt}(t)$ de la cible 6.

L'estimateur $\hat{A}_{tgt}(t)$ est décrit par l'équation suivante :

$$\hat{A}_{tgt}(t) = \frac{V_{rel}^{mes}(t) + V_{ego}^{mes}(t) - V_{rel}^{mes}(t-\Delta t) - V_{ego}^{mes}(t-\Delta t)}{\Delta t} \qquad (\text{équation } 19)$$

Pour estimer l'accélération de la cible 6 à l'instant t, on mesure la vitesse relative $V_{rel}^{mes}$ et la vitesse absolue $V_{ego}^{mes}$ du véhicule 7 à l'instant t-$\Delta$t et à l'instant t, $\Delta$t étant une durée fixe égale par exemple à 100ms.

Si l'estimateur $\hat{A}_{tgt}(t)$ donne une valeur à l'instant t inférieur à un seuil T, par exemple -2.5 m/s$^2$, on en déduit que la cible 6 freine brutalement.

Dans les étapes 2, 4 et 5, l'accélération relative $a_{rel}(t)$ est déterminée selon l'évolution de la vitesse relative $V_{rel}^{mes}$.

Lors d'un changement de cible, on peut assister à un saut brutal de la vitesse relative pouvant perturber les boucles de régulation. Pour éviter ce phénomène, un changement de cible génère un retour à l'état initial, c'est-à-dire à l'étape 0.

Le module de freinage 3 fonctionne avec un délai d'attente (« timeout », en anglais). Lorsque le freinage est déclenché, le freinage sera arrêté après une durée déterminée, par exemple 2 secondes.

Lorsque la consigne de freinage est maximale, c'est-à-dire $T_{Brk}(t)$ est égale à $T_{MAX}$, cela ne présente pas de problème.

Cependant, comme le module 9 fait varier la valeur de la consigne de freinage $T_{Brk}(t)$, notamment en réduisant la valeur de la puissance de freinage demandée s1 issue du module 3, il est probable que le module 3 cesse de fournir une consigne de freinage avant que la vitesse relative $V_{rel}^{mes}(t)$ soit nulle.

Pour annihiler ce risque, le module 9 ajuste la consigne minimale de freinage $T_{MIN}$ pour que la vitesse relative $V_{rel}^{mes}(t)$ soit nulle à l'issue d'une durée prédéterminée à compter du déclenchement du freinage. Cette durée est par exemple égale à 5 secondes. Dans ce cas, la contrainte de distance finale est alors considérée comme secondaire et ne sera plus respectée.

Afin de sécuriser le module 9, à chaque pas de calcul dans les différentes étapes du procédé décrit précédemment, l'estimation $\hat{D}_{Tmax,Vrel}=0$ de la distance d'arrêt du véhicule 7 pour la consigne $T_{MAX}$ de freinage est recalculée. Si cette distance devient inférieure à un seuil R, par exemple la valeur de R est égale à 0.4m, la consigne $T_{Brk}(t)$ est égale à $T_{MAX}$ pendant la durée de freinage, puis on passe à l'étape initiale 0.

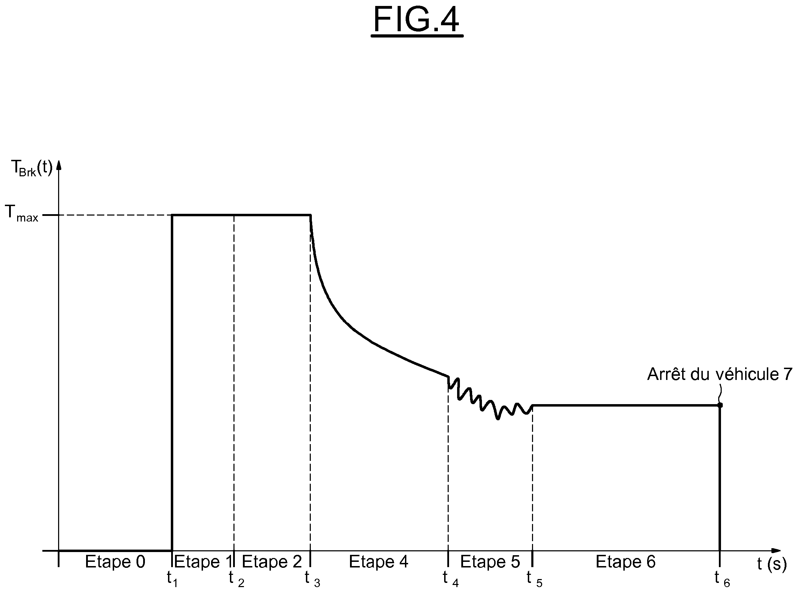

La figure 4 illustre une phase de freinage selon la procédure décrite précédemment dans le cas où la valeur de l'estimation $\hat{D}_{Tmax,Vrel=0}$ est supérieure à la valeur de seuil R pour tous les pas de calcul et la valeur de l'estimateur $\hat{A}_{tgt}(t)$ de l'accélération $a_{tgt}(t)$ de la cible 6 est supérieure au seuil T, c'est-à-dire la cible 6 ne freine pas brusquement.

Elle représente la consigne $T_{Brk}(t)$ de freinage variable selon le temps t délivré par le module 9 aux moyens de freinage 5.

A l'étape 0 du procédé, le module 9 se comporte comme un fil.

A l'instant t1, le module de freinage 3 délivre un signal s1 égal à $T_{MAX}$ suite à la détection d'un risque de collision avec la cible 6 par le système d'aide à la conduite 8.

La cible 6 est autorisée, le test T1 est validé. Le procédé passe à l'étape 1. Le module 9 se comporte toujours comme un fil, $T_{Brk}(t)$ est égale à s1, c'est-à-dire $T_{Brk}(t)$ est égale à $T_{MAX}$.

Puis le procédé passe à l'étape 2 à l'instant t2. La consigne $T_{Brk}(t)$ est égale à $T_{MAX}$ et on estime la valeur de l'estimation $\hat{D}_{Tmax,Vrel=0}$. La valeur estimée est supérieure au seuil P, le test T2 est validé.

Le procédé passe à l'étape 4 à l'instant t3. La consigne $T_{Brk}(t)$ de freinage est recalculée en boucle ouverte de sorte à prendre en compte les conditions de la chaussée.

Puis à l'instant t4, la consigne $T_{Brk}(t)$ de freinage est recalculée à l'étape 5 en boucle fermée de sorte à corriger la consigne déterminée en boucle ouverte en prenant en compte les perturbations liées au véhicule 7, notamment les perturbations causées par le frein moteur du véhicule 7.

Puis à l'instant t5, le véhicule 7 est proche de la cible 6, c'est-à-dire à une distance inférieure du seuil H. Le test T4 est validé et le procédé passe à l'étape 6.

Dans cette étape, la consigne $T_{Brk}(t)$ de freinage à l'étape précédente, c'est-à-dire à l'étape 5, est maintenue jusqu'à la fin du freinage. Le véhicule 7 s'arrête à l'instant t6.

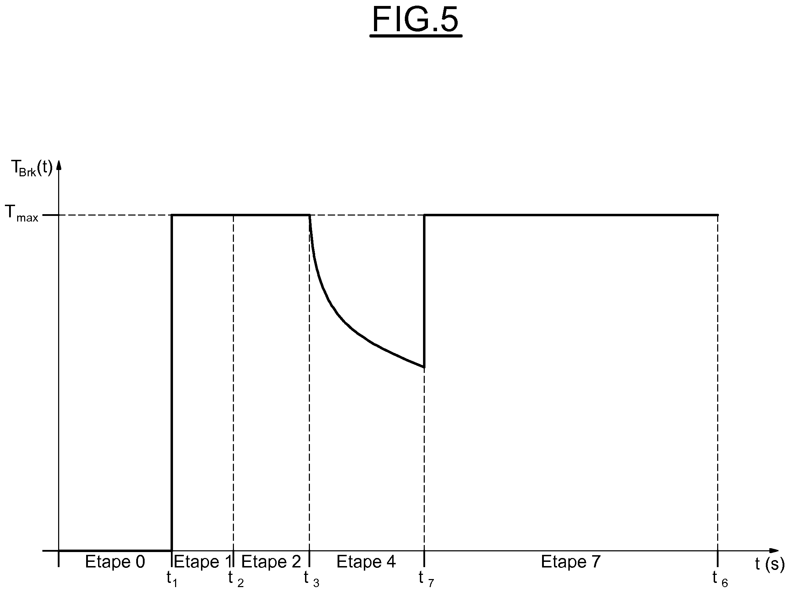

La figure 5 illustre une phase de freinage selon la procédure décrite précédemment dans le cas où la valeur de l'estimation $\hat{D}_{Tmax,Vrel=0}$. est inférieure à la valeur de seuil R pour un pas de calcul à l'issue de l'étape 3 à l'instant t7.

On retrouve les étapes 0, 1, 2 et 3 de la figure 4 qui se sont déroulées comme décrites précédemment.

A l'instant t7, la consigne $T_{Brk}(t)$ est égale à $T_{MAX}$ pendant la durée de freinage, puis on passe à l'étape initiale 0.

Avantageusement, lors d'un freinage d'urgence, le procédé de contrôle d'une distance de freinage d'urgence élabore une loi de commande des moyens de freinage 5 du véhicule 7 prenant en compte les caractéristiques du véhicule et les conditions environnementales dans lesquelles évolue le véhicule de sorte à optimiser la distance d'arrêt de freinage du véhicule, tout en garantissant à chaque instant du déroulement de la phase de freinage d'urgence une annihilation d'un risque de collision entre le véhicule 7 et la cible 6 détectée.

## Revendications

1.  Procédé de contrôle d'une distance de freinage d'urgence pour un véhicule automobile comprenant un système d'aide à la conduite (8) comprenant un module de freinage (3) et un module (9) de contrôle de distance de freinage d'urgence, **caractérisé en ce que** lorsque le module de freinage délivre une consigne (s1) de freinage d'urgence en entrée dudit module de contrôle de distance, ledit module de contrôle de distance élabore une consigne ($T_{Brk}(t)$) de freinage variable selon le temps (t) et destinée à des moyens de freinage (5) dudit véhicule (7), l'élaboration de ladite consigne ($T_{Brk}(t)$) de freinage utilisant un modèle dynamique unidimensionnel dudit véhicule (7).

2.  Procédé selon la revendication 1, dans lequel on estime la distance ($D_{Tmax,Vrel=0}$) d'arrêt du véhicule (7) pour une consigne de freinage maximale ($T_{MAX}$) des moyens de freinage (5) et on détermine ladite consigne ($T_{Brk}(t)$).

3.  Procédé selon l'une quelconques des revendications 1 à 2, dans lequel ladite consigne ($T_{Brk}(t)$) est élaborée en boucle ouverte.

4.  Procédé selon la revendication 3, dans lequel on corrige ladite consigne ($T_{Brk}(t)$) élaborée en boucle ouverte en intégrant des moyens de correction formant une boucle fermée.

5.  Procédé selon l'une quelconque des revendications 1 à 4, dans lequel on détermine une estimation ($\hat{A}_{tgt}(t)$) de l'accélération d'une cible (6) identifiée par des moyens de détection (4) reliés audit système d'aide à la conduite (8).

6.  Système d'aide à la conduite (8) comprenant un module de freinage (3) et un module (9) de contrôle de distance de freinage d'urgence, le module de freinage étant destiné à être relié à des moyens de freinage (5), **caractérisé en ce que** le module de contrôle de distance de freinage est relié à une sortie (S3) du module de freinage, ledit module de contrôle de distance de freinage utilisant un modèle dynamique unidimensionnel dudit véhicule (7).

7.  Système d'aide à la conduite selon la revendication 6, comprenant en outre une unité de traitement embarquée.

8.  Véhicule automobile équipé d'un système d'aide à la conduite selon l'une des revendications 6 et 7.

## Patentansprüche

1.  Verfahren zur Steuerung einer Notbremsentfernung für ein Kraftfahrzeug, das ein Lenkassistenzsystem (8) beinhaltet, das ein Bremsmodul (3) und ein Modul (9) zur Steuerung der Notbremsentfernung beinhaltet, **dadurch gekennzeichnet, dass**, wenn das Bremsmodul einen Notbremssollwert (s1) am Eingang des Moduls zur Steuerung der Entfernung bereitstellt, das Modul zur Steuerung der Entfernung einen zeit(t)-variablen Bremssollwert ($T_{Brk}$(t)) erstellt, der für Bremsmittel (5) des Fahrzeugs (7) gedacht ist, wobei bei der Erstellung des Bremssollwerts ($T_{Brk}$(t)) ein eindimensionales dynamisches Modell des Fahrzeugs (7) genutzt wird.

2. Verfahren nach Anspruch 1, wobei die Anhalteentfernung ($D_{Tmax,Vrel=0}$) des Fahrzeugs (7) für einen maximalen Bremssollwert ($T_{MAX}$) der Bremsmittel (5) geschätzt wird und der Sollwert ($T_{Brk}$(t)) ermittelt wird.

3. Verfahren nach einem der Ansprüche 1 bis 2, wobei der Sollwert ($T_{Brk}$(t)) in einem offenen Regelkreis erstellt wird.

4. Verfahren nach Anspruch 3, wobei der in einem offenen Regelkreis erstellte Sollwert ($T_{Brk}$(t)) durch die Integration von Korrekturmitteln, die einen geschlossenen Regelkreis bilden, korrigiert wird.

5. Verfahren nach einem der Ansprüche 1 bis 4, wobei eine Schätzung ($A_{tgt}$(t)) der Beschleunigung eines Ziels (6), das durch Detektionsmittel (4), die mit dem Lenkassistenzsystem (8) verbunden sind, identifiziert wird, ermittelt wird.

6. Lenkassistenzsystem (8), das ein Bremsmodul (3) und ein Modul (9) zur Steuerung der Notbremsentfernung beinhaltet, wobei das Bremsmodul dazu bestimmt ist, mit Bremsmitteln (5) verbunden zu sein, **dadurch gekennzeichnet, dass** das Modul zur Steuerung der Bremsentfernung mit einem Ausgang (S3) des Bremsmoduls verbunden ist, wobei das Modul zur Steuerung der Bremsentfernung ein eindimensionales dynamisches Modell des Fahrzeugs (7) nutzt.

7. Lenkassistenzsystem nach Anspruch 6, das ferner eine Onboard-Verarbeitungseinheit beinhaltet.

8. Kraftfahrzeug, das mit einem Lenkassistenzsystem nach einem der Ansprüche 6 und 7 ausgerüstet ist.

**Claims**

1. Method for controlling an emergency braking distance for a motor vehicle having a driver assistance system (8) comprising a braking module (3) and an emergency braking distance control module (9), **characterized in that** when the braking module delivers an emergency braking setpoint (s1) to the input of said distance control module, said distance control module generates a braking setpoint ($T_{Brk}$(t)) that is variable according to time (t) and intended for the braking means (5) of said vehicle (7), the generation of said braking setpoint ($T_{Brk}$(t)) using a one-dimensional dynamic model of said vehicle (7).

2. Method according to Claim 1, wherein the stopping distance ($D_{Tmax,Vrel=0}$) of the vehicle (7) for a maximum braking setpoint ($T_{MAX}$) of the braking means (5) is estimated and said setpoint ($T_{Brk}$(t)) is determined.

3. Method according to either one of Claims 1 and 2, wherein said setpoint ($T_{Brk}$(t)) is generated in open loop mode.

4. Method according to Claim 3, wherein said setpoint ($T_{Brk}$(t)) generated in open loop mode is corrected by integrating correction means forming a closed loop.

5. Method according to any one of Claims 1 to 4, wherein an estimation ($A_{tgt}$(t)) of the acceleration of a target (6) identified by detection means (4) linked to said driver assistance system (8) is determined.

6. Driver assistance system (8) comprising a braking module (3) and an emergency braking distance control module (9), the braking module being intended to be linked to braking means (5), **characterized in that** the braking distance control module is linked to an output (S3) of the braking module, said braking distance control module using a one-dimensional dynamic model of said vehicle (7).

7. Driver assistance system according to Claim 6, further comprising an embedded processing unit.

8. Motor vehicle equipped with a driver assistance system according to either of Claims 6 and 7.

# FIG.1
# ART ANTERIEUR

# FIG.2

# FIG.3

FIG.4

# FIG.5

EP 3 678 905 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016221549 A
- CN 104139781
- US 2014156157 A
- CA 2860892
- DE 102011085585
- DE 102010029223